# EUROPEAN PATENT SPECIFICATION

(11) **EP 3 939 805 B1**
(45) Date of publication and mention of the grant of the patent: **04.01.2023**
(21) Application number: 21185897.2
(22) Date of filing: 15.07.2021
(51) Int. Cl.: B60B 7/00, B60B 7/04, B60B 7/06, B60B 7/14

(54) **COVER ASSEMBLY FOR WHEEL HUB**
ABDECKANORDNUNG FÜR EINE RADNABE
ENSEMBLE ENJOLIVEUR DE MOYEU DE ROUE

(30) Priority: 17.07.2020 TW 109124283
(43) Date of publication of application: 19.01.2022
(73) Proprietor: TW Racing Parts Inc., 40755 Taichung City, Xitun Dist. (TW)
(72) Inventor: LIAO, Chih-Hsien, 40755 Taichung City (TW)
(74) Representative: Style, Kelda Camilla Karen

(56) References cited:
- TW-A- 202 010 654
- TW-U- M 580 519
- US-A1- 2018 319 209

## Description

The invention relates to a cover assembly, more particularly to a cover assembly for a hub of a wheel rim. Such an assembly is known from US 2018/0319209 A1.

A further existing cover assembly for a hub of a wheel rim, as disclosed in Taiwanese Publication No. 202010654, includes a main cover body and a side cover body. A plurality of first ears is provided in a central hole of the hub. The main cover body has a plurality of second ears provided in a central hole thereof and corresponding to the first ears. A plurality of screws are used to fixedly fasten the second ears to the first ears. The side cover body has a plurality of engaging feet extending outwardly therefrom, and an elastic ring disposed in positioning grooves of the engaging feet. The side cover body covers the central hole of the main cover body by engaging the engaging feet to an annular recess at the back of the central hole of the main cover body.

Although the existing cover assembly can cover the central hole of the hub, because only the engaging feet of the side cover body are engaged to the main cover body, it is likely that the side cover body may be easily detached from the main cover body when the engaging feet are broken, so that dust and moisture can easily enter the hub. Further, since a plurality of the screws are needed to fixedly fasten the main cover body to the hub, assembly and disassembly of the existing cover assembly to the hub are inconvenient.

Therefore, an object of the present invention is to provide an improved cover assembly that can be easily assembled to and disassembled from a hub of a wheel rim and that can effectively prevent dust and moisture from entering the hub.

According to this invention, a cover assembly is configured for removably covering a hub of a wheel rim. The hub includes a hub inner peripheral wall defining a hub central hole and having a first internal thread, a hub outer peripheral wall spaced apart from the hub inner peripheral wall, and a radial peripheral wall connected between the hub inner and outer peripheral walls and that is formed with a plurality of bolt holes surrounding the hub central hole. The cover assembly comprises a ring-shaped outer cover, a connector and a first elastic ring. The outer cover defines a cover central hole and configured to cover the bolt holes. The connector includes a connector outer annular wall, a connector inner annular wall connected to and extending inwardly from the connector outer annular wall, and an annular flange extending outwardly and radially from a junction of the connector inner and outer annular walls. The connector inner annular wall extends through the cover central hole for connection with the hub inner peripheral wall, and has an outer wall surface provided with a first external thread for threadedly connecting with the first internal thread. The annular flange abuts, when mounted, against the outer cover at a side opposite to the bolt holes. The first elastic ring is sleeved on the connector inner annular wall and is configured to be disposed between and abut against the connector inner annular wall and the hub inner peripheral wall.

Other features and advantages of the invention will become apparent in the following detailed description of an embodiment with reference to the accompanying drawings, of which:
FIG. 1 is an assembled perspective view of a cover assembly according to an embodiment of the present invention and a hub of a wheel rim;
FIG. 2 is an exploded perspective view of the embodiment and the hub;
FIG. 3 is an assembled sectional view of the embodiment and the hub; and
FIG. 4 is an enlarged partial sectional view of FIG. 3.

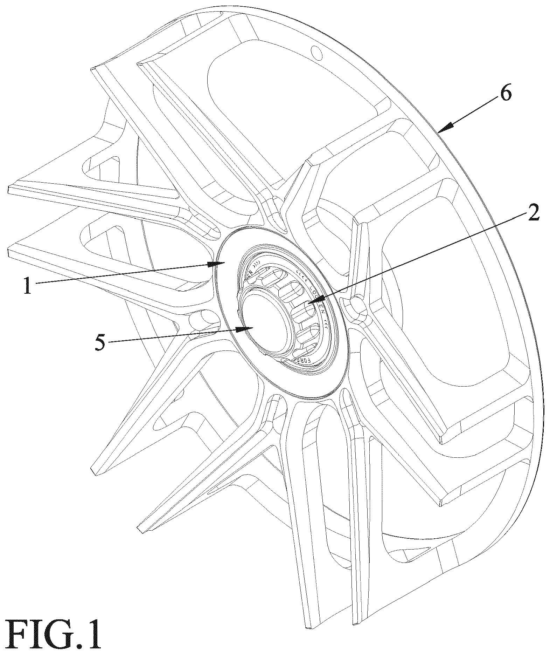

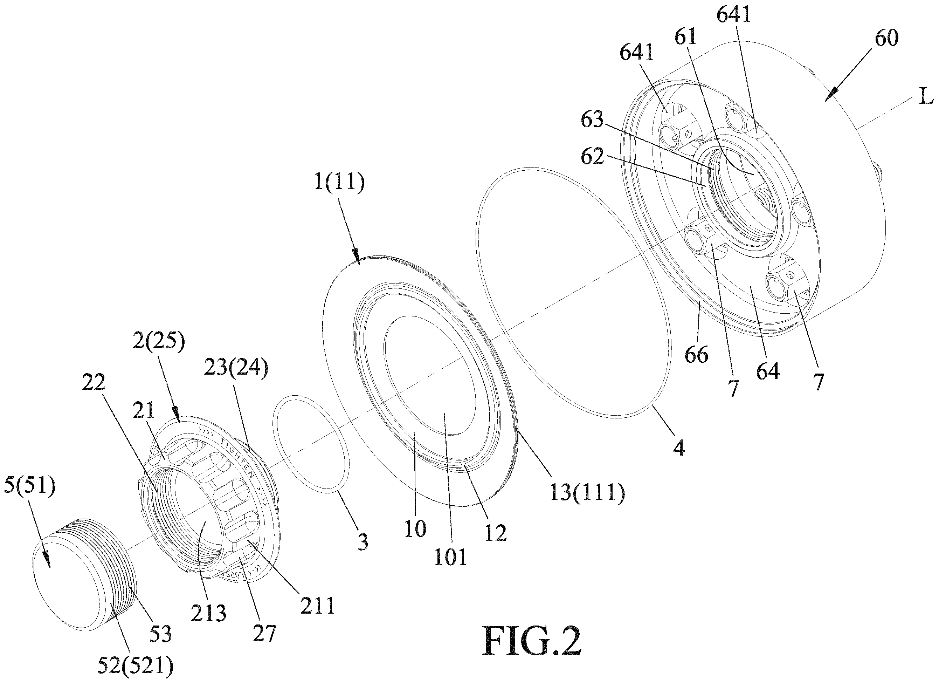

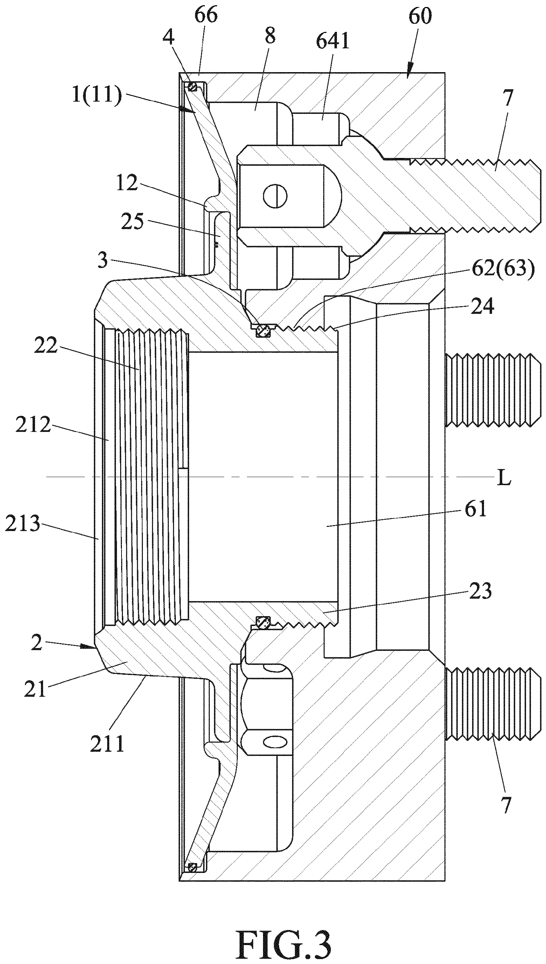

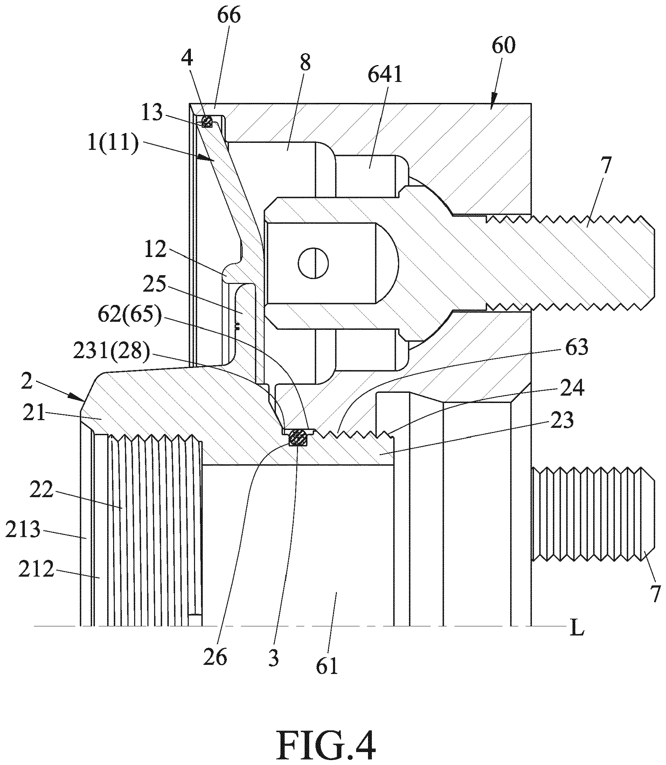

Referring to FIGS. 1 to 4, a cover assembly according to an embodiment of the present invention includes a ring-shaped outer cover 1, a connector 2, a first elastic ring 3, a second elastic ring 4 and a decorative cover 5. The cover assembly of this embodiment is configured to removably cover a hub 60 of a wheel rim 6. The hub 60 includes a hub inner peripheral wall 62, a hub outer peripheral wall 66 spaced apart from the hub inner peripheral wall 62, and a radial peripheral wall 64 connected between the hub inner and outer peripheral walls 62, 66. The hub inner peripheral wall 62 surrounds an axis (L), defines a hub central hole 61, and has a first internal thread 63, and a non-threaded portion 65 located externally of the first internal thread 63. The radial peripheral wall 64 is formed with five angularly spaced-apart bolt holes 641 surrounding the hub central hole 61. The hub 60 is connected to an axle (not shown) of a vehicle by extending five bolts 7 respectively through the bolt holes 641.

The ring-shaped outer cover 1 includes a central plate portion 10 surrounding the axis (L) and defining a cover central hole 101, an outer plate portion 11 extending obliquely outward from the central plate portion 10 and configured to cover the bolt holes 641, and an annular protrusion 12 extending outwardly and axially from a junction of the central plate portion 10 and the outer plate portion 11. The outer plate portion 11 has an outer peripheral surface 111 formed with an annular groove 13.

The connector 2 includes a connector outer annular wall 21 surrounding the axis (L) and defining an opening 213, a connector inner annular wall 23 connected to and extending inwardly from the connector outer annular wall 21, and an annular flange 25 extending outwardly and radially from a junction of the connector inner and outer annular walls 23, 21. The connector outer annular wall 21 has an outer wall surface 211 formed with a plurality of angularly spaced-apart concave grip portions 27, and an inner wall surface 212 formed with a second internal thread 22. The opening 213 is opposite to the connector inner annular wall 23 along the axis (L).

The connector inner annular wall 23 extends through the cover central hole 101 to connect with the hub inner peripheral wall 62, and has an outer wall surface 231 provided with a first external thread 24 for threadedly connecting with the first internal thread 63. The outer wall surface 231 is further provided with a non-threaded portion 28 located between the first external thread 24 and the junction of the connector inner and outer annular walls 23, 21, and an annular groove 26 formed in the non-threaded portion 28. The annular flange 25 abuts against the central plate portion 10 at a side opposite to the bolt holes 641, is surrounded by the annular protrusion 12, and has an outer peripheral surface abutting against an inner peripheral surface of the annular protrusion 12.

The annular flange 25 has a thickness in an axial direction smaller than a length of the annular protrusion 12 protruding from the junction of the central plate portion 10 and the outer plate portion 11. The concave grip portions 27 facilitate a user to grip the connector 2 and rotate the same with less effort.

The first elastic ring 3 is sleeved on the connector inner annular wall 23. Specifically, the first elastic ring 3 is received in the annular groove 26, and is disposed between and abuts against a groove-defining wall of the annular groove 26 and the non-threaded portion 65 of the hub inner peripheral wall 62.

The second elastic ring 4 is disposed in the annular groove 13 of the outer plate portion 11, and is configured to be disposed between and abuts against a groove-defining wall of the annular groove 13 and the hub outer peripheral wall 66.

The decorative cover 5 removably covers the opening 213 in the connector outer annular wall 21, and includes a base wall 51 covering the opening 213, and a surrounding wall 52 connected to and extending transversely from a periphery of the base wall 51. The surrounding wall 52 has an outer wall surface 521 formed with a second external thread 53 threadedly connected to the second internal thread 22.

When the cover assembly of this embodiment is assembled to the hub 60, the outer plate portion 11 of the outer cover 1 abuts against the hub 60 and covers the bolt holes 641, the second elastic ring 4 abuts between the groove-defining wall of the annular groove 13 and the hub outer peripheral wall 66, the first external thread 24 is threadedly connected to the first internal thread 63, the first elastic ring 3 abuts between the groove-defining wall of the annular groove 26 and the non-threaded portion 65 of the hub inner peripheral wall 62, the annular flange 25 abuts against the central plate portion 10, and the annular protrusion 12 surrounds the annular flange 25. Further, the outer cover 1, the connector 2 and the hub 60 cooperatively define an internal space 8 communicating with the bolt holes 641.

In this embodiment, with the outer peripheral surface of the annular flange 25 abutting against the inner peripheral surface of the annular protrusion 12, external dust and moisture can be effectively prevented from entering the internal space 8 through an abutment junction of the annular flange 25 and the central plate portion 10.

The advantages of this invention can be summarized as follows:
1. Through the threaded connection of the first external thread 24 of the connector inner annular wall 23 with the first internal thread 63 of the hub 60, and through the first elastic ring 3 abutting against the groove-defining wall of the annular groove 26 and the non-threaded portion 65 of the hub inner peripheral wall 62, dust or moisture in the hub central hole 61 can be prevented from entering the internal space 8 along the hub inner peripheral wall 62.
2. The annular protrusion 12 surrounding the annular flange 25 can block part of the dust or moisture from the outside or an outer edge of the hub 60 from entering an abutment junction of the annular flange 25 and the central plate portion 10.
3. Through the abutment of the outer cover 1 against the hub 60, and through the abutment of the second elastic ring 4 between the groove-defining wall of the annular groove 13 and the hub outer peripheral wall 66, entry of dust or moisture from the outside to the internal space 8 through an abutment junction of the outer cover 1 and the hub 60 can be reduced.
4. Through the connector outer annular wall 21 that protrudes outwardly relative to the hub 60 and that is formed with the concave grip portions 27, the user can grip the concave grip portions 27 to rotate the connector 2 with less effort, so that the connector 2 can be conveniently and quickly assembled to and disassembled from the hub 60 without tools.

## Claims

1. A cover assembly for removably covering a hub (60) of a wheel rim (6), the hub (60) including a hub inner peripheral wall (62) that defines a hub central hole (61) and that has a first internal thread (63), a hub outer peripheral wall (66) spaced apart from the hub inner peripheral wall (62), and a radial peripheral wall (64) that is connected between the hub inner peripheral wall (62) and the hub outer peripheral wall (66) and that is formed with a plurality of bolt holes(641) surrounding the hub central hole (61), said cover assembly comprising:
a ring-shaped outer cover (1) defining a cover central hole (101) and configured to cover the bolt holes (641);
a connector (2) including a connector outer annular wall (21), a connector inner annular wall (23) connected to and extending inwardly from said connector outer annular wall (21), and an annular flange (25) extending outwardly and radially from a junction of said connector inner annular wall (23) and said connector outer annular wall (21), said connector inner annular wall (23) extending through said cover central hole (101) for connection with the hub inner peripheral wall (62), and having an outer wall surface (231) provided with a first external thread (24) for threadedly connecting with the first internal thread (63),
**characterised in that**
said annular flange (25) abuts, when mounted, against said ring-shaped outer cover (1) at a side opposite to the bolt holes (641); and **in that** the cover assembly further comprises a first elastic ring (3) sleeved on said connector inner annular wall (23) and configured to be disposed between and abut against said connector inner annular wall (23) and the hub inner peripheral wall (62).

2. The cover assembly as claimed in Claim 1, wherein said outer wall surface (231) of said connector inner annular wall (23) is further provided with an annular groove (26) for receiving said first elastic ring (3), said first elastic ring (3) being configured to be disposed between and abut against a groove-defining wall of said annular groove (26) and the hub inner peripheral wall (62).

3. The cover assembly as claimed in Claim 2, wherein the hub inner peripheral wall (62) further has a non-threaded portion (65) located externally of the first internal thread (63), said outer wall surface (231) of said connector inner annular wall (23) being further provided with a non-threaded portion (28) located between said first external thread (24) and said junction of said connector inner annular wall (23) and said connector outer annular wall (21), said annular groove (26) being formed in said non-threaded portion (28) of said connector inner annular wall (23) and being configured to be disposed between and abut against said groove-defining wall of said annular groove (26) and the non-threaded portion (65) of the hub inner peripheral wall (62).

4. The cover assembly as claimed in any one of Claims 1 to 3, wherein said ring-shaped outer cover (1) includes a central plate portion (10) that defines said cover central hole (101), an outer plate portion (11) extending obliquely outward from said central plate portion (10), and an annular protrusion (12) that extends outwardly and axially from a junction of said central plate portion (10) and said outer plate portion (11) and that surrounds said annular flange (25).

5. The cover assembly as claimed in Claim 4, wherein said annular flange (25) has a thickness in an axial direction smaller than a length of said annular protrusion (12) protruding from said junction of said central plate portion (10) and said outer plate portion (11), said annular flange (25) having an outer peripheral surface abutting against an inner peripheral surface of said annular protrusion (12).

6. The cover assembly as claimed in any one of Claims 1 to 5, wherein said connector outer annular wall (21) has an outer wall surface (211) formed with at least one concave grip portion (27).

7. The cover assembly as claimed in any one of Claims 1 to 6, wherein said connector outer annular wall (21) defines an opening (213) opposite to said connector inner annular wall (23), and said cover assembly further comprises a decorative cover (5) removably covering said opening (213).

8. The cover assembly as claimed in Claim 7, wherein said connector outer annular wall (21) has an inner wall surface (212) formed with a second internal thread (22), said decorative cover (5) including a base wall (51) covering said opening (213), and a surrounding wall (52) connected to and extending transversely from a periphery of said base wall (51), said surrounding wall (52) having an outer wall surface (521) formed with a second external thread (53) threadedly connected to said second internal thread (22).

9. The cover assembly as claimed in Claim 4, wherein said outer plate portion (11) has an outer peripheral surface (111) formed with an annular groove (13), said cover assembly further comprising a second elastic ring (4) disposed in said annular groove (13) of said outer plate portion (11) and configured to be disposed between and abut against a groove-defining wall of said annular groove (13) of said outer plate portion (11) and the hub outer peripheral wall (66) of the hub (60).

## Patentansprüche

1. Abdeckungsanordnung zum lösbaren Abdecken einer Nabe (60) einer Radfelge (6), wobei die Nabe (60) eine Nabeninnenumfangswand (62), die ein Nabenmittelloch (61) definiert und die ein erstes Innengewinde (63) hat, eine Nabenaußenumfangswand (66), die von der Nabeninnenumfangswand (62) beabstandet ist, und eine radiale Umfangswand (64), die zwischen der Nabeninnenumfangswand (62) und der Nabenaußenumfangswand (66) verbunden ist und die mit mehreren das Nabenmittelloch umgebenden Bolzenlöchern (641) ausgebildet ist, enthält, wobei die Abdeckungsanordnung aufweist:
eine ringförmige äußere Abdeckung (1), die ein Abdeckungsmittelloch (101) definiert und ausgestaltet ist, um die Bolzenlöcher (641) abzudecken;
einen Verbinder (2), der eine Verbinderaußenringwand (21), eine Verbinderinnenringwand (23), die mit der Verbinderaußenringwand (21) verbunden ist und sich von dieser nach innen erstreckt, und einen ringförmigen Flansch (25), der sich von einer Verbindung der Verbinderinnenringwand (23) und der Verbinderaußenringwand (21) nach außen und radial erstreckt, enthält, wobei die Verbinderinnenringwand (23) sich durch das Abdeckungsmittelloch (101) zur Verbindung mit der Nabeninnenumfangswand (62) erstreckt und eine äußere Wandfläche (231) hat, die mit einem ersten Außengewinde (24) zum Gewindeverbinden mit dem ersten Innengewinde (63) versehen ist,
**dadurch gekennzeichnet, dass**
der ringförmige Flansch (25) im montierten Zustand an der ringförmigen äußeren Abdeckung (1) an einer Seite gegenüber den Bolzenlöchern (641) anliegt; und
die Abdeckungsanordnung ferner einen ersten elastischen Ring (3) aufweist, der auf die Verbinderinnenringwand (23) aufgeschoben ist und so ausgestaltet ist,
dass er zwischen der Verbinderinnenringwand (23) und der Nabeninnenumfangswand (62) angeordnet ist und an diesen anliegt.

2. Abdeckungsanordnung nach Anspruch 1, bei welcher die Außenwandfläche (231) der Verbinderinnenringwand (23) ferner mit einer Ringnut (26) zum Aufnehmen des ersten elastischen Rings (3) versehen ist, wobei der erste elastische Ring (3) so ausgestaltet ist, dass er zwischen einer nut-definierenden Wand der Ringnut (26) und der Nutinnenumfangswand (62) angeordnet ist und an diesen anliegt.

3. Abdeckungsanordnung nach Anspruch 2, bei welcher die Nabeninnenumfangswand (62) ferner einen gewindefreien Abschnitt (65) hat, der außerhalb des ersten Innengewindes (63) angeordnet ist, wobei die äußere Wandfläche (231) der Verbinderinnenringwand (23) ferner mit einem gewindefreien Abschnitt (28) versehen ist, der sich zwischen dem ersten Außengewinde (24) und der Verbindung der Verbinderinnenringwand (23) und der Verbinderaußenringwand (21) befindet, wobei die ringförmige Nut (26) in dem gewindefreien Abschnitt (28) der Verbinderinnenringwand (23) ausgebildet ist und so ausgestaltet ist, dass sie zwischen der nutdefinierenden Wand der Ringnut (26) und dem gewindefreien Abschnitt (65) der Nabeninnenumfangswand (62) angeordnet ist und an diesen anliegt.

4. Abdeckungsanordnung nach einem der Ansprüche 1 bis 3, bei welcher die ringförmige äußere Abdeckung (1) einen zentralen Plattenabschnitt (10), der das Abdeckungsmittelloch (101) definiert, einen äußeren Plattenabschnitt (11), der sich vom zentralen Plattenabschnitt (10) schräg nach außen erstreckt, und einen ringförmigen Vorsprung (12), der sich von einer Verbindung des zentralen Plattenabschnitts (10) und des äußeren Plattenabschnitts (11) nach außen und axial erstreckt und den ringförmigen Flansch (25) umgibt, enthält.

5. Abdeckungsanordnung nach Anspruch 4, bei welcher der ringförmige Flansch (25) eine Dicke in einer axialen Richtung hat, die kleiner ist als eine Länge des ringförmigen Vorsprungs (12), der von der Verbindung des zentralen Plattenabschnitts (10) und des äußeren Plattenabschnitts (11) vorsteht, wobei der ringförmige Flansch (25) eine äußere Umfangsfläche hat, die an einer inneren Umfangsfläche des ringförmigen Vorsprungs (12) anliegt.

6. Abdeckungsanordnung nach einem der Ansprüche 1 bis 5, bei welcher die Verbinderaußenringwand (21) eine Außenwandfläche (211) hat, die mit wenigstens einem konkaven Griffabschnitt (27) ausgebildet ist.

7. Abdeckungsanordnung nach einem der Ansprüche 1 bis 6, bei welcher die Verbinderaußenringwand (21) eine Öffnung (213) gegenüber der Verbinderinnenringwand (23) definiert und die Abdeckungsanordnung ferner eine dekorative Abdeckung (5) aufweist, die die Öffnung (213) entfernbar abdeckt.

8. Abdeckungsanordnung nach Anspruch 7, bei welcher die Verbinderaußenringwand (21) eine Innenwandfläche (212) hat, die mit einem zweiten Innengewinde (22) ausgebildet ist, wobei die dekorative Abdeckung (5) eine die Öffnung (213) abdeckende Grundwand (51) und eine mit einem Umfang der Grundwand (51) verbundene und sich von dieser quer erstreckende Umgebungswand (52) enthält, wobei die Umgebungswand (52) eine Außenwandfläche (521) hat, die mit einem zweiten Außengewinde (53) ausgebildet ist, das gewindemäßig mit dem zweiten Innengewinde (22) verbunden ist.

9. Abdeckungsanordnung nach Anspruch 4, bei welcher der äußere Plattenabschnitt (11) eine Außenumfangsfläche (111) hat, die mit einer Ringnut (13) ausgebildet ist, wobei die Abdeckungsanordnung ferner einen zweiten elastischen Ring (4) aufweist, der in der Ringnut (13) des äußeren Plattenabschnitts (11) angeordnet ist und so ausgestaltet ist, dass er zwischen einer nut-definierenden Wand der Ringnut (13) des äußeren Plattenabschnitts (11) und der Nabenaußenumfangswand (66) der Nabe (60) angeordnet ist und an diesen anliegt.

## Revendications

1. Ensemble couvercle pour recouvrir de manière amovible un moyeu (60) d'une jante de roue (6), le moyeu (60) incluant : une paroi périphérique interne de moyeu (62) qui définit un trou central de moyeu (61) et qui a un premier filetage interne (63), une paroi périphérique externe de moyeu (66) espacée de la paroi périphérique interne de moyeu (62), et une paroi périphérique radiale (64) qui est raccordée entre la paroi périphérique interne de moyeu (62) et la paroi périphérique externe de moyeu (66) et qui est formée d'une pluralité d'orifices ménagés pour des boulons (641) entourant le trou central de moyeu (61), ledit ensemble couvercle comprenant :
un couvercle externe annulaire (1) définissant un trou central de couvercle (101) et configuré pour recouvrir les orifices ménagés pour des boulons (641) ;
un élément de raccordement (2) incluant une paroi annulaire externe d'élément de raccordement (21), une paroi annulaire interne d'élément de raccordement (23) raccordée à, et s'étendant vers l'intérieur depuis, ladite paroi annulaire externe d'élément de raccordement (21), et une bride annulaire (25) s'étendant vers l'extérieur et radialement depuis une jonction de ladite paroi annulaire interne d'élément de raccordement (23) et de ladite paroi annulaire externe d'élément de raccordement (21), ladite paroi annulaire interne d'élément de raccordement (23) s'étendant à travers ledit trou central de couvercle (101) pour se raccorder à la paroi périphérique interne de moyeu (62) et ayant une surface de paroi externe (231) pourvue d'un premier filetage externe (24) pour un raccordement par filetage au premier filetage interne (63),
**caractérisé en ce que** :
ladite bride annulaire (25) vient en butée, lorsqu'elle est montée, contre ledit couvercle externe annulaire (1) au niveau d'un côté opposé aux orifices ménagés pour des boulons (641) ; et
l'ensemble couvercle comprend en outre un premier anneau élastique (3) emmanché sur ladite paroi annulaire interne d'élément de raccordement (23) et configuré pour être disposé entre, et venir en butée contre, ladite paroi annulaire interne d'élément de raccordement (23) et la paroi périphérique interne de moyeu (62).

2. Ensemble couvercle selon la revendication 1, dans lequel ladite surface de paroi externe (231) de ladite paroi annulaire interne d'élément de raccordement (23) est en outre pourvue d'une rainure annulaire (26) destinée à recevoir ledit premier anneau élastique (3), ledit premier anneau élastique (3) étant configuré pour être disposé entre, et venir en butée contre, une paroi définissant une rainure de ladite rainure annulaire (26) et la paroi périphérique interne de moyeu (62).

3. Ensemble couvercle selon la revendication 2, dans lequel la paroi périphérique interne de moyeu (62) a en outre une portion non filetée (65) située à l'extérieur du premier filetage interne (63), ladite surface de paroi externe (231) de ladite paroi annulaire interne d'élément de raccordement (23) étant en outre pourvue d'une portion non filetée (28) située entre ledit premier filetage externe (24) et ladite jonction de ladite paroi annulaire interne d'élément de raccordement (23) et de ladite paroi annulaire externe d'élément de raccordement (21), ladite rainure annulaire (26) étant formée dans ladite portion non filetée (28) de ladite paroi annulaire interne d'élément de raccordement (23) et étant configurée pour être disposée entre, et venir en butée contre, ladite paroi définissant une rainure de ladite rainure annulaire (26) et la portion non filetée (65) de la paroi périphérique interne de moyeu (62).

4. Ensemble couvercle selon l'une quelconque des revendications 1 à 3, dans lequel ledit couvercle externe annulaire (1) inclut : une portion de plaque centrale (10) qui définit ledit trou central de couvercle (101), une portion de plaque externe (11) s'étendant obliquement vers l'extérieur depuis ladite portion de plaque centrale (10), et une saillie annulaire (12) qui s'étend vers l'extérieur et axialement depuis une jonction de ladite portion de plaque centrale (10) et de ladite portion de plaque externe (11) et qui entoure ladite bride annulaire (25).

5. Ensemble couvercle selon la revendication 4, dans lequel ladite bride annulaire (25) a une épaisseur dans une direction axiale inférieure à une longueur de ladite saillie annulaire (12) faisant saillie depuis ladite jonction de ladite portion de plaque centrale (10) et de ladite portion de plaque externe (11), ladite bride annulaire (25) ayant une surface périphérique externe venant en butée contre une surface périphérique interne de ladite saillie annulaire (12).

6. Ensemble couvercle selon l'une quelconque des revendications 1 à 5, dans lequel ladite paroi annulaire externe d'élément de raccordement (21) a une surface de paroi externe (211) formée d'au moins une portion de préhension concave (27).

7. Ensemble couvercle selon l'une quelconque des revendications 1 à 6, dans lequel ladite paroi annulaire externe d'élément de raccordement (21) définit une ouverture (213) opposée à ladite paroi annulaire interne d'élément de raccordement (23), et ledit ensemble couvercle comprend en outre un couvercle décoratif (5) recouvrant de manière amovible ladite ouverture (213).

8. Ensemble couvercle selon la revendication 7, dans lequel ladite paroi annulaire externe d'élément de raccordement (21) a une surface de paroi interne (212) formée d'un deuxième filetage interne (22), ledit couvercle décoratif (5) incluant une paroi de base (51) recouvrant ladite ouverture (213), et une paroi environnante (52) raccordée à, et s'étendant transversalement depuis, une périphérie de ladite paroi de base (51), ladite paroi environnante (52) ayant une surface de paroi externe (521) formée d'un deuxième filetage externe (53) raccordé par filetage audit deuxième filetage interne (22).

9. Ensemble couvercle selon la revendication 4, dans lequel ladite portion de plaque externe (11) a une surface périphérique externe (111) formée d'une rainure annulaire (13), ledit ensemble couvercle comprenant en outre un deuxième anneau élastique (4) disposé dans ladite rainure annulaire (13) de ladite portion de plaque externe (11) et configuré pour être disposé entre, et venir en butée contre, une paroi définissant une rainure de ladite rainure annulaire (13) de ladite portion de plaque externe (11) et la paroi périphérique externe de moyeu (66) du moyeu (60).
